# EUROPEAN PATENT APPLICATION

(11) **EP 3 437 508 A1**
(43) Date of publication of application: **06.02.2019**
(21) Application number: 17773138.7
(22) Date of filing: 23.03.2017
(51) Int. Cl.: A45B 25/00, A45B 25/18

(54) **SOLAR UMBRELLA**

(30) Priority: 29.03.2016 CN 201620251015 U
(71) Applicant: Beijing Apollo Ding Rong Solar Technology Co., Ltd., Beijing 100176 (CN)
(72) Inventor: JIANG, Bo, Beijing 100176 (CN); JU, Yanpeng, Beijing 100176 (CN); ZHAO, Xun, Beijing 100176 (CN)
(74) Representative: Rupprecht, Kay
(86) International application number: PCT/CN2017/077804
(87) International publication number: WO 2017/167108

(57) **Abstract**

A solar umbrella comprises umbrella cloth (1), an umbrella rod (2), an umbrella base (3), an auxiliary umbrella (4), umbrella ribs (9), solar cells (101), a storage battery (8), and line concentrators (7). The solar cells (101) are packaged on the umbrella cloth (1). The umbrella cloth (1) is supported by the umbrella ribs (9). The umbrella rod (2) is connected the umbrella ribs (9) and the umbrella base (3). The line concentrators (7) are mounted on the umbrella ribs (9). The line concentrator (7) is provided with multiple sockets (505). The solar cells (101) are connected to the sockets (505) of the line concentrator (7) in an inserted manner. The auxiliary umbrella (4) is disposed above the umbrella cloth (1) and covers the sockets (505). The storage battery (8) is located in the umbrella rod (2) and is connected to the line concentrator (7). Thus, the solar umbrella has the advantages of easy maintenance and long service life.

## Description

### Technical Field

The present disclosure relates to the field of umbrellas, and particularly to a solar umbrella.

### Background Art

With the development of solar power technology, more and more articles in life start to be equipped with a solar power generating device for heat supply. In recent years, more and more umbrellas for keeping out of sun and rain have a function of solar power generation. Solar cells generally include rigid monocrystalline silicon solar cell and flexible amorphous silicon solar cell. Although flexible solar cells have certain flexibility, such flexible solar cells would still be damaged in a case where they are frequently folded with umbrella cloth. This problem is more prominent for rigid solar cell. In the prior art, the solar cells are directly mounted on the umbrella cloth by pasting, stitching and other ways, however, the solar cells cannot be detached, held or replaced, which affects the service life, and is unfavorable to the folding of the umbrella.

In a Chinese patent for utility model with the number of announcement of grant of patent right CN202311616U, entitled "Multifunctional Flexible Amorphous Silicon Solar Cell Umbrella", a device for supplying power to an Light Emitting Diode (LED) lamp, a fan and so on by generating power through a flexible solar cell is disclosed. In the technical solution, a flexible amorphous silicon solar cell block is sandwiched by a transparent water-proof layer and a white diffuse reflection base layer. In order to avoid damage to the flexible solar cell caused by folding of the umbrella cloth, a gap is provided at a middle folding line of each piece of umbrella cloth on which the flexible amorphous silicon solar cell is provided.

In a Chinese patent for utility model with the application number 201310604375.4, entitled "Novel Solar Umbrella Structure", a technical solution that a flexible solar panel is connected, by lead wires, with cells inside an umbrella handle is disclosed.

In a Chinese patent for invention with the application number 200810219003.9, entitled "Automatic Remote-control Solar Umbrella", a technical solution that folding and unfolding (i.e. opening and closing) of an umbrella is achieved by remotely controlling a motor is disclosed.

The prior art has following defects: firstly, since an umbrella often needs to be opened and closed, in which process, the solar cell or a conducting line between the solar cell and a storage battery is easily damaged, moreover, the damage to a single solar cell or the conducting line thereof may affect the power generation of other solar cells; secondly, such solution still has a shortcoming that the solar cells cannot be detached or replaced; thirdly, in practical application, when the umbrella is folded, it is substantially impossible to ensure that the umbrella cloth is only folded at the middle folding line, thus it still likely to cause damage to the solar cells; and finally, the solar cells are supported by the umbrella cloth, which easily causes damage to the umbrella cloth, and thus affects the effects of keeping out of sun and rain.

### Summary

Objects of the present disclosure include improving reliability, maintenance convenience, and service life of the solar umbrella.

In order to achieve at least the above objects, following technical solutions are provided in embodiments of the present disclosure.

A solar umbrella includes umbrella cloth, an umbrella rod, an umbrella base, an auxiliary umbrella, umbrella ribs, solar cells, a storage battery and a line concentration device. The solar cells which are packaged are provided on the umbrella cloth. The umbrella cloth is supported by the umbrella ribs. The umbrella rod connects the umbrella ribs and the umbrella base. The line concentration device is mounted on the umbrella ribs. The line concentration device has multiple sockets. The solar cells are connected to the sockets of the line concentration device. The auxiliary umbrella is disposed above the umbrella cloth and covers the sockets. The storage battery is located inside the umbrella rod and connected with the line concentration device.

In an alternative embodiment, the line concentration device includes a top cover of the line concentration device, a line concentrator fastener, a line concentrator and a line concentration device base. The line concentration device base is mounted on the umbrella ribs. The line concentration device base is provided thereon with a recess. The line concentrator fastener is fastened onto the line concentration device base so as to hold the line concentrator within the recess. The sockets are located on the line concentrator, and the top cover of the line concentration device is located above the auxiliary umbrella and connected with the line concentrator fastener, so as to clamp the auxiliary umbrella.

In an alternative embodiment, the solar umbrella further includes a control device mounted on the umbrella rod. The control device is provided with a Universal Serial Bus (USB) interface and a charging interface.

In an alternative embodiment, LED lamps are mounted on the umbrella ribs. Opening and closing of the umbrella ribs are driven by a motor. The storage battery supplies power to the LED lamps and the motor under control of the control device.

In an alternative embodiment, the umbrella base includes a base upright column, a base main body and a base fastening device. The base upright column is connected, through the base fastening device, with the base main body. The umbrella rod is inserted into and detachably connected with the base upright column, and is tightened and fixed through a fastening device.

In an alternative embodiment, the storage battery includes a battery cell, a fixing plate, a battery top cover and a battery base. The battery cell is clamped by the fixing plate and fixed between the battery top cover and the battery base. The battery base is provided with a positioning groove, a hole is provided at the positioning groove, a protrusion corresponding to the positioning groove is provided within the umbrella rod, the positioning groove cooperates with the protrusion to enable the storage battery to slide into the umbrella rod. A bolt passes through the umbrella rod and then is screwed in the hole at the positioning groove.

In an alternative embodiment, each of the umbrella ribs includes a skeleton, a slide rail mounted on the skeleton, a first blanking cap, a second blanking cap and a third blanking cap. A length of the slide rail is smaller than a length of the skeleton, the slide rail has a bottom wall, and a pair of upper walls, with the pair of upper walls extending from two sides of the bottom wall towards each other with a gap formed between each upper wall and the bottom wall, the bottom wall and the upper walls define a slide groove which is partially open. The first blanking cap encloses a distal end of the slide rail, the second blanking cap encloses a proximal end of the slide rail, and the third blanking cap encloses a distal end of the skeleton and limits a position of the first blanking cap.

In an alternative embodiment, an auxiliary slide rail is provided at each of the two sides of the slide rail. The auxiliary slide rail is in shape of a tube on which a slot is provided and which has a major arc-shaped cross section.

In an alternative embodiment, the first blanking cap and the third blanking cap are in a one-piece structure.

In an alternative embodiment, a connecting rib extends downwards from a middle position of the bottom wall of the slide rail and a clamping portion is located below the connecting rib. The clamping portion is in shape of a tube on which a slot is provided and which has a major arc-shaped cross section. The skeleton has a tubular portion and a clamping groove, with the clamping groove located at a top of the tubular portion and having a major arc-shaped cross section. The clamping portion of the slide rail is located inside the clamping groove and the connecting rib extends out from a slot formed on the clamping groove.

In an alternative embodiment, the slide groove is communicated with the clamping groove.

In an alternative embodiment, the first blanking cap and the third blanking cap are in separated structures, the first blanking cap has a first arm portion, first tube portions, a second tube portion and a blocking portion, with the first arm portion configured for enclosing the slide groove, the first tube portions located at two sides of the first arm portion for enclosing the auxiliary slide rails, the second tube portion located below the first arm portion and configured for enclosing the clamping portion, and the blocking portion located below the second tube portion. The third blanking cap has a third tube portion for enclosing the tubular portion and a stop portion extending upwards from the third tube portion.

In an alternative embodiment, the second blanking cap has a second arm portion and fourth tube portions, with the second arm portion configured for enclosing the slide groove, and the fourth tube portions located at two sides of the second arm portion and configured for enclosing the auxiliary slide rails. The second blanking cap does not enclose the clamping portion or the clamping groove.

In an alternative embodiment, the first blanking cap and/or the second blanking cap are/is fastened, through a bolt, onto the slide rail, and/or the third blanking cap is fastened, through a bolt, onto the skeleton.

In an alternative embodiment, each of the solar cells is limited, by the first blanking cap and the second blanking cap, inside the slide groove and in sliding fit with the slide groove.

In an alternative embodiment, the solar umbrella further includes support rods located at two sides of the umbrella cloth. The two support rods are respectively located inside the auxiliary slide rails of neighboring umbrella ribs, and the each piece of umbrella cloth extends out from the slots of the auxiliary slide rails.

Embodiments of the present disclosure provide the following beneficial effects.

In the embodiments of the present disclosure, various solar cells are connected to the multiple sockets on the line concentration device, currents generated by various solar cells, after being converged by the line concentration device, enter the storage battery; and the line concentration device can function to protect the conducting lines of the solar cells, and the damage to a single solar cell or the conducting lines thereof will not affect the operation of other solar cells. The plug connection is flexible, and easy for maintenance; and when the storage battery needs to supply power to outside, it can also be quite easily realized through the plug connection.

Furthermore, the structure of the line concentration device in the embodiments can provide sufficient anti-collision and rain-proof protection to the line concentrator as a main converging part.

Furthermore, with the USB interface on the control device, power can be conveniently supplied to external electric equipment. In cases where there is no sunlight, the storage battery can be charged through the charging interface using mains supply.

Furthermore, the structure of the storage battery facilitates the positioning of each battery cell inside the umbrella rod.

Furthermore, by supporting the solar cells with the slide grooves on the umbrella ribs, the following advantages are provided: firstly, the umbrella cloth of the solar umbrella can be arbitrarily folded without damaging the solar cells; secondly, the solar cells can be extracted out just by opening the first blanking cap, and if flexible solar cells are used, the solar cells can be extracted from the slide groove only by means of slight deformation of the flexible solar cells, even without opening the first blanking cap, therefore, the detachment is more convenient; and thirdly, since the umbrella cloth does not need to support weight of the solar cells, the umbrella cloth is less likely to be damaged.

Furthermore, with the cooperation of the auxiliary slide rails with the support rods at the two sides of the umbrella cloth, the umbrella cloth can be extracted out when the first blanking cap is opened, such that it is more convenient to replace the umbrella cloth, satisfying the requirements of maintenance, shape change, and so on of the umbrella.

Furthermore, the slide rail and the skeleton are assembled in a clamped manner, and thus, after the third blanking cap is opened, the slide rail can be extracted out just by pulling the slide rail outwards, which facilitates the replacement and maintenance of the slide rail, and satisfies different dimension requirements of the solar cells.

Furthermore, the slide groove is communicated with the clamping groove, the conducting lines of the solar cells can enter the clamping groove of the skeleton from the slide groove of the slide rail, thus further enter the umbrella rod and be connected with the storage battery. Therefore, the conducting lines of the solar cells can be protected in the whole running process, and the folding of the umbrella does not affect the conducting lines, which avoids fracture of the conducting lines.

Furthermore, both of the first blanking cap and the second blanking cap have the function of enclosing the slide groove and the auxiliary slide rails, and thus can protect the solar cells and the support rods of the umbrella cloth at the same time.

Furthermore, cooperation of the first blanking cap and the third blanking cap can prevent the first blanking cap from accidentally slipping, and make the assembling and disassembling easy.

### Brief Description of Drawings

Embodiments of the present disclosure will be further described below in detail in combination with accompanying drawings, wherein
Fig. 1 is a front view of a solar umbrella according to an embodiment of the present disclosure;
Fig. 2 is a front view of the solar umbrella, with an umbrella cloth and an auxiliary umbrella being removed, according to an embodiment of the present disclosure;
Fig. 3 is an exploded view of a solar umbrella top portion according to an embodiment of the present disclosure;
Fig. 4 is an exploded view of a line concentration device in the solar umbrella top portion according to an embodiment of the present disclosure;
Fig. 5 is a partial enlarged view of the line concentration device of the solar umbrella according to an embodiment of the present disclosure;
Fig. 6 is an exploded view of a control device of the solar umbrella according to an embodiment of the present disclosure;
Fig. 7 is a front view of a touch panel of the control device of the solar umbrella according to an embodiment of the present disclosure;
Fig. 8 is an exploded view of an umbrella base and an umbrella rod of the solar umbrella according to an embodiment of the present disclosure;
Fig. 9 is an exploded view of the umbrella base of the solar umbrella according to an embodiment of the present disclosure;
Fig. 10 is a perspective view of a storage battery of the solar umbrella according to an embodiment of the present disclosure;
Fig. 11 is a perspective view of the solar umbrella according to an embodiment of the present disclosure;
Fig. 12 is a perspective view of the solar umbrella, from another angle, according to an embodiment of the present disclosure;
Fig. 13 is a perspective view of an umbrella rib according to an embodiment of the present disclosure;
Fig. 14 is a perspective view of the umbrella rib, from another angle, according to an embodiment of the present disclosure;
Fig. 15 is a perspective view of a slide rail according to an embodiment of the present disclosure;
Fig. 16 is a perspective view of a skeleton according to an embodiment of the present disclosure;
Fig. 17 is a perspective view of a first blanking cap according to an embodiment of the present disclosure;
Fig. 18 is a perspective view of the first blanking cap, from another angle, according to an embodiment of the present disclosure;
Fig. 19 is a perspective view of a second blanking cap according to an embodiment of the present disclosure;
Fig. 20 is a perspective view of a third blanking cap according to an embodiment of the present disclosure;
Fig. 21 is a perspective view of the umbrella cloth according to an embodiment of the present disclosure;
Fig. 22 is a perspective view of the umbrella cloth, in a mounting structure, according to an embodiment of the present disclosure;
Fig. 23 is a partial enlarged view of portion A in Fig. 12;
Fig. 24 is a perspective view of the umbrella rib, with the solar cells mounted thereon, according to an embodiment of the present disclosure;
Fig. 25 is a schematic diagram of a control circuit of the solar umbrella according to an embodiment of the present disclosure;
Fig. 26 is a schematic diagram of a power supply circuit of the storage battery according to an embodiment of the present disclosure.

Reference signs in the figures: 1-umbrella cloth, 2-umbrella rod, 3-umbrella base, 4-auxiliary umbrella, 5-line concentration device, 6-control device, 7-fastening device, 8-storage battery, 9-umbrella rib, 101-solar cell, 110-support rod, 201-hole, 301-base upright column, 302-base main body, 303-base fastening device, 304-base fastening screw, 501- top cover of the line concentration device, 502-line concentrator fastener, 503-line concentrator, 504-line concentration device base, 505-socket, 506-recess, 601-control device rear cover, 602-control device front cover, 603-control device rear cover fixing bolt, 604-USB interface, 801-battery cell, 802-fixing plate, 803-hole, 804-battery top cover, 805-battery base, 806-hole, 807-positioning groove, 901-LED lamp, 910-slide rail, 911-bottom wall, 912-upper wall, 913-gap, 914-slide groove, 915-auxiliary slide rail, 916-slot, 917-connecting rib, 918-clamping portion, 919-slot, 9110-communicating hole, 920-skeleton, 921-tubular portion, 922-clamping groove, 923-slot, 924-notch, 930-first blanking cap, 931-first arm portion, 932-first tube portion, 933-second tube portion, 934-blocking portion, 935-first plate portion, 936-bolt hole, 940-second blanking cap, 941-second arm portion, 942-fourth tube portion, 943-second plate portion, 944-bolt hole, 950-third blanking cap, 951-third tube portion, 952-stop portion.

### Detailed Description of Embodiments

In the following description, "up" and "down" are respectively pointed to a sky direction and a ground direction, "distal" and "proximal" refer to directions relative to an umbrella rod 2, that is, an end away from the umbrella rod 2 is a distal end, and such distal end is usually at an edge of the umbrella, and an end close to the umbrella rod 2 is a proximal end.

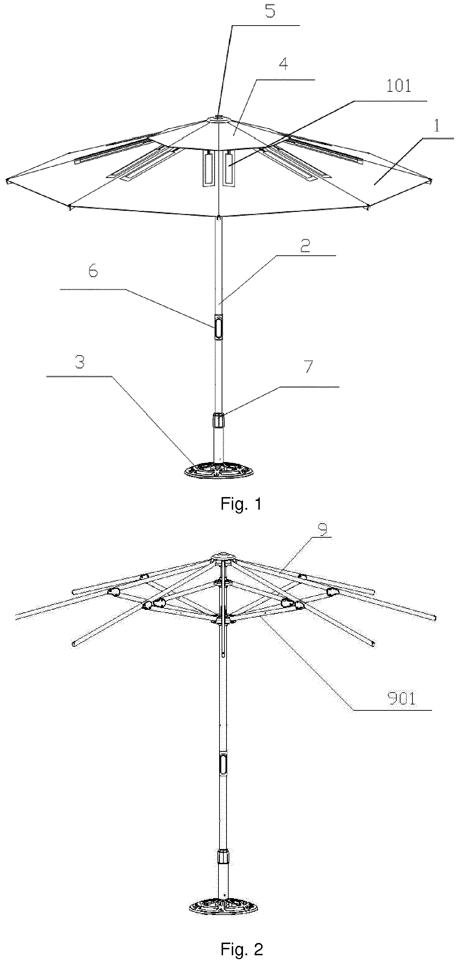

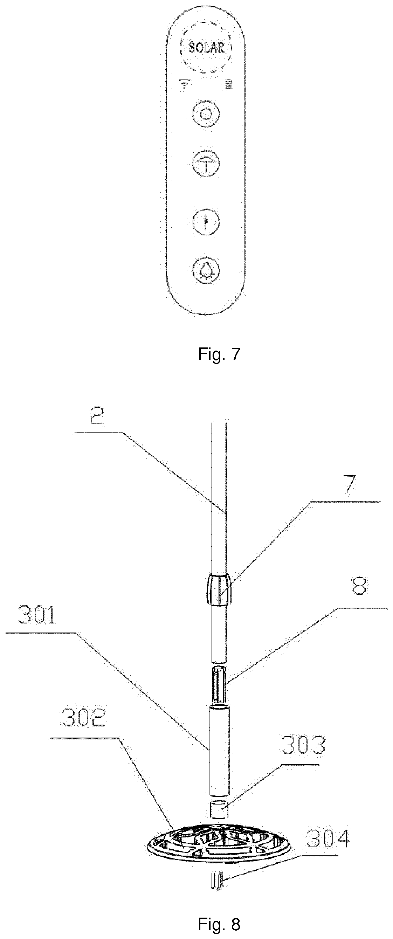

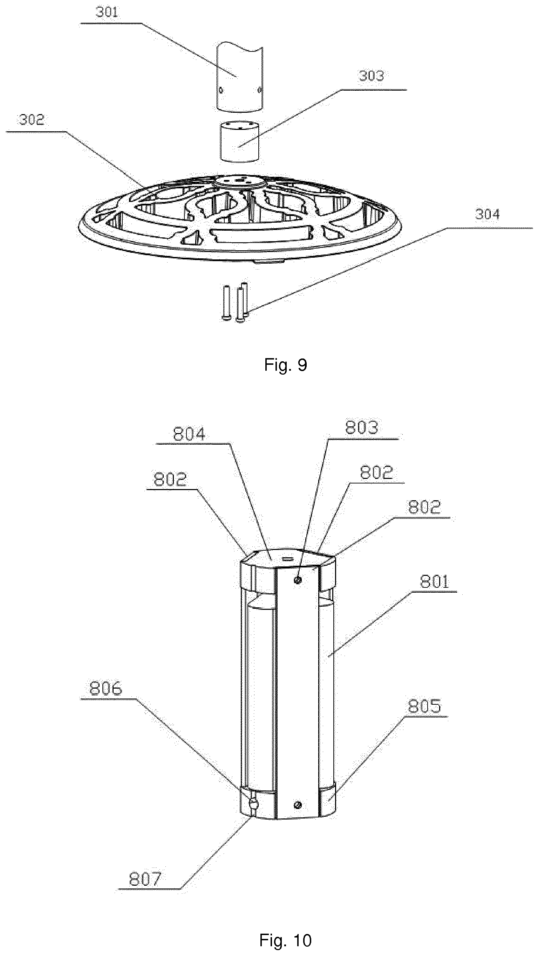

Referring to Fig. 1 and Fig. 2, a solar umbrella according to the present embodiment includes: umbrella cloth 1, an umbrella rod 2, an umbrella base 3, an auxiliary umbrella 4, a line concentration device 5, a control device 6, a fastening device 7, a storage battery 8 (see Fig. 8 and Fig. 10), umbrella ribs 9, solar cells 101 and so on. The solar cells are directly or indirectly packaged on the umbrella cloth 1, and the solar cells 101 are connected in series or in parallel according to requirements of a current and a voltage. A circuit of each solar cell 101 is provided with a diode, so as to ensure that an individual solar cell 101, after being damaged, does not affect an operation of the whole circuit. The umbrella cloth 1 is supported by the umbrella ribs 9. The umbrella rod 2 connects the umbrella ribs 9 and the umbrella base 3. LED lamps 901 are mounted on the umbrella ribs 9. The umbrella rod 2 is provided thereon with electrically conductive contacts, and the LED lamps are connected with the contacts after the umbrella ribs are unfolded, so as to realize an illumination of the LED lamps 901.

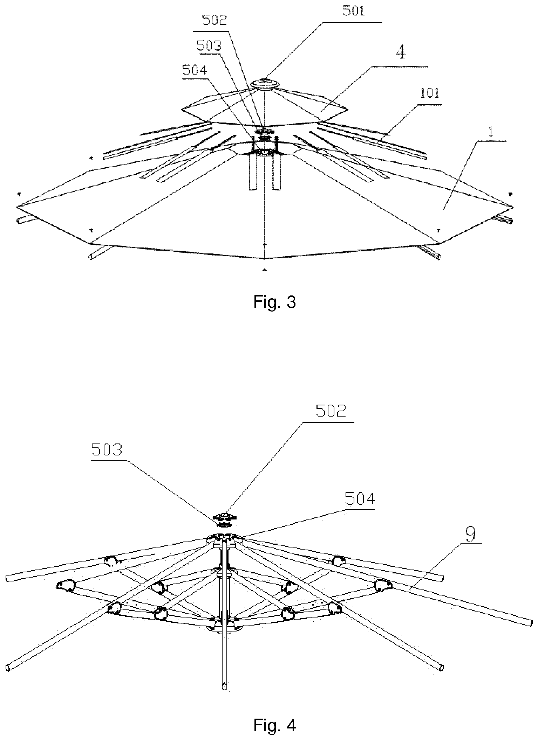

Referring to Figs. 3, 4 and 5, the line concentration device 5 is mounted on the umbrella ribs 9. More specifically, the line concentration device 5 includes a top cover 501 of the line concentration device, a line concentrator fastener 502, a line concentrator 503 and a line concentration device base 504. The line concentration device base 504 is mounted on the umbrella ribs 9, and the line concentration device base 504 is provided thereon with a recess 506. The line concentrator 503 is placed inside the recess 506, and the line concentrator fastener 502 is fastened through a bolt onto the line concentration device base 504, so as to hold the line concentrator 503 within the recess 506. The line concentrator 503 has multiple sockets 505, a conducting line of each solar cell 101 is connected to one socket 505, so as to realize a concentration of currents from the solar cells 101 to the storage battery 8. The top cover 501 of the line concentration device is located above the auxiliary umbrella 4, and the top cover 501 of the line concentration device is connected through a bolt with the line concentrator fastener 502, such that the auxiliary umbrella 4 is clamped by the top cover of the line concentration device and the line concentrator fastener, which ensures that the auxiliary umbrella 4 is disposed above the umbrella cloth 1 and covers the sockets 505, thereby serving an anti-collision, water-proof and dust-proof protective function to the sockets 505.

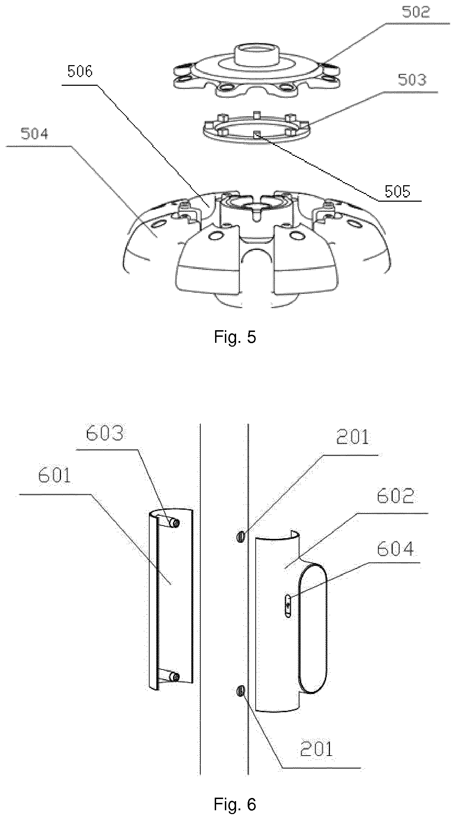

Referring to Fig. 6, this figure shows a connection structure of the umbrella rod 2 and the control device 6 in detail. The control device 6 includes a control device rear cover 601 and a control device front cover 602. The control device rear cover 601 is provided thereon with a control device rear cover fixing bolt 603 which is configured to pass through a hole 201 on the umbrella rod 2 and then cooperates with the control device front cover 602 to fix the control device 6 on the umbrella rod 2. Two sides of the control device front cover 602 are symmetrically provided with USB interfaces 604, through which the solar energies stored by the storage battery 8 inside the umbrella rod 2 can be supplied to external equipment. The control device 6 is further provided therein with a bluetooth interface and a network card interface, which can provide a WIFI signal and can be manipulated through a mobile phone APP. The control device 6 can be further provided with a charging interface, for supplying power to the storage battery 8 using mains supply. In the present embodiment, opening and closing of the umbrella ribs 9 are driven by a motor, and the storage battery 8 supplies power to the motor under control of the control device 6. A WIFI module can be mounted inside the control device 6. A remote controller controls the motor remotely to drive the folding or opening of the solar umbrella, control WIFI, control power-on and power-off of the LED lamps 901 and so on. The remote controller may be a mobile phone which realizes the control functions by downloading an app.

Referring to Fig. 7, the control device 6 has a touch panel. The touch panel is provided thereon with a power switch, a button for opening the umbrella, a button for closing the umbrella and a button for turning on and off the LED lamp, and all of the buttons are in a touch mode.

Referring to Figs. 8 and 9, the umbrella base 3 includes a base upright column 301, a base main body 302 and a base fastening device 303. The umbrella rod 2 is inserted into and detachably connected with the base upright column 301, and the umbrella rod and the base upright column are tightened and fixed through a fastening device 7, for example, a threaded pipe. The storage battery 8 is kept inside the umbrella rod 2. The storage battery 8 is connected with the line concentration device 5 through the conducting lines inside the umbrella rod 2. The base upright column 301 is connected 302 with the base main body through the base fastening device 303, and is tightened and fixed through the base fastening screws 304.

Referring to Fig. 10, the storage battery 8 includes a battery cell 801, a fixing plate 802, a battery top cover 804 and a battery base 805. The battery cells 801 are placed between the battery top cover 804 and the battery base 805, and held by the fixing plate 802. A positioning groove 807 is provided on the battery base, and a hole 806 is provided at the positioning groove 807. A protrusion corresponding to the positioning groove 807 is provided within the umbrella rod, and in mounting, the positioning groove 807 of the storage battery 8 correspondingly cooperates with the protrusion inside the umbrella rod 2, such that the storage battery 8 is enabled to slide into the umbrella rod 2. A bolt passes through the umbrella rod 2 and then is screwed in the hole 806 at the positioning groove 807, so as to fix the storage battery 8.

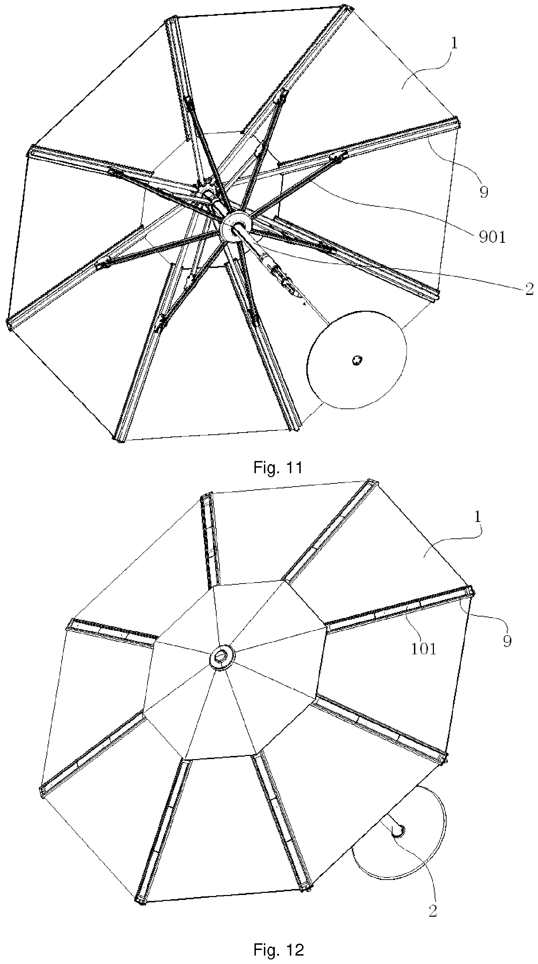

Referring to Fig. 11, it is a view obtained by observing the solar umbrella obliquely from below. The umbrella ribs 9, the umbrella cloth 1, the umbrella rod 2 and so on of the solar umbrella can be seen in this figure.

Referring to Fig. 12, it is a view obtained by observing the solar umbrella obliquely from above. The solar umbrella further includes the solar cells 101. Different from the prior art, the solar cells 101 are not directly supported by the umbrella cloth 1, but supported by the umbrella ribs 9. Therefore, in the present embodiment, the solar cells 101 can be regarded as being indirectly packaged on the umbrella cloth 1, and advantages of the indirect packaging will be described in the following. In practical manufacture, the solar cells 101 may also be directly packaged with the umbrella cloth 1 by adopting manners in the prior art such as stitching and pasting.

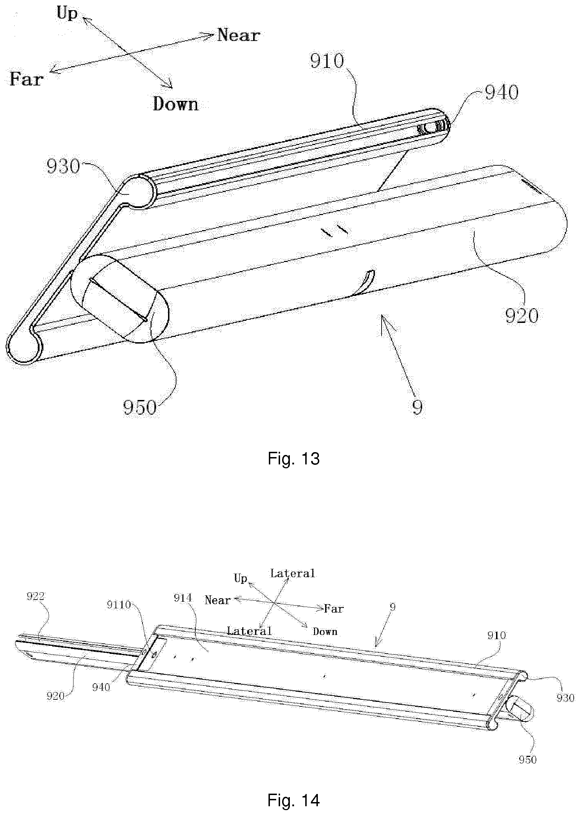

Referring to Figs. 13 and 14, each of the umbrella ribs 9 includes a skeleton 920, a slide rail 910 mounted on the skeleton 920, a first blanking cap 930, a second blanking cap 940 and a third blanking cap 950. Although the first blanking cap 930 and the third blanking cap 950 are in separated structures in an embodiment described below, in practical application, the first blanking cap 930 and the third blanking cap 950 may also be in a one-piece structure. Similarly, the slide rail 910 and the skeleton 920 are in separated structures in the embodiment described below, but in practical application, the slide rail and the skeleton may also be in a one-piece structure, and the one-piece structure still falls within the scope of "mounting" referred to in embodiments of the present disclosure, and thus will not be distinguished again. In a direction from far to near, a length of the slide rail 910 is smaller than a length of the skeleton 920. Therefore, a part of the skeleton 920 is covered by the slide rail 910, and the other part of the skeleton is not covered by the slide rail 910.

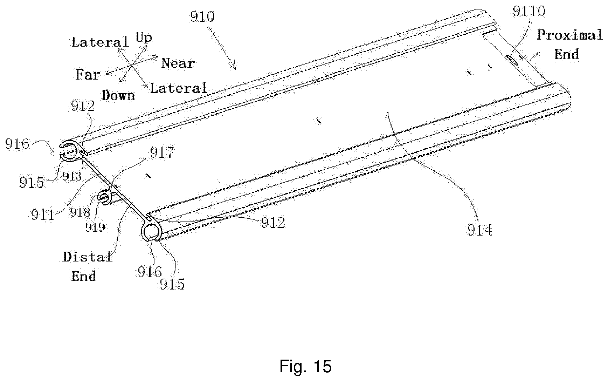

Referring to Fig. 15, the slide rail 910 has a bottom wall 911 and a pair of upper walls 912, with the pair of upper walls extending from two sides of the bottom wall 911 towards each other. A gap 913 exists between each of the two upper walls 912 and the bottom wall 911. The two upper walls 912 do not contact and have a distance therebetween. Thus, the bottom wall 911 and the upper walls 912 define a slide groove 914 which is partially open. An auxiliary slide rail 915 is provided at each of the two sides of the bottom wall 911 of the slide rail 910. The auxiliary slide rail 915 has a major-arc cross section, and viewing from the perspective view, the auxiliary slide rail 915 is in a shape of tube with a slot 916. A connecting rib 917 extends downwards from middle position between the two auxiliary slide rails 915 of the bottom wall 911 of the slide rail 910, and a clamping portion 918 is located below the connecting rib 917. The clamping portion 918 also has a major-arc cross section, and viewing from the perspective view, the clamping portion 918 is in a shape of tube with a slot 919. A communicating hole 9110 is provided in a position of the bottom wall 911 close to a proximal end.

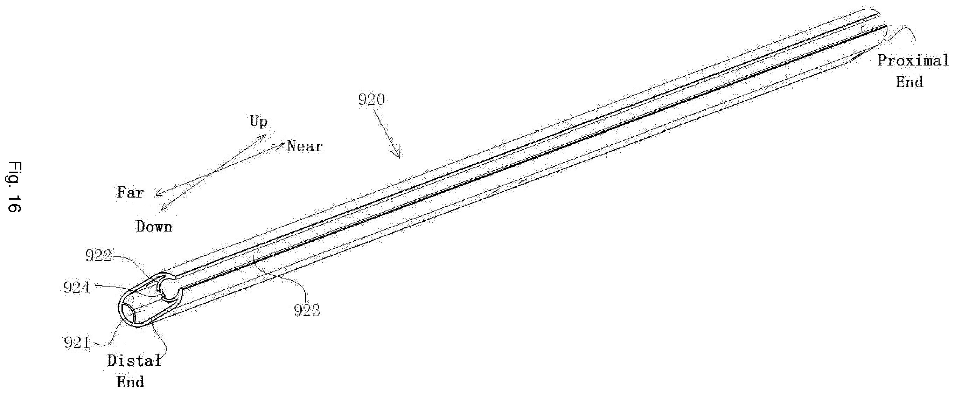

Referring to Fig. 16, the skeleton 920 has a tubular portion 921 and a clamping groove 922, with the clamping groove located at a top of the tubular portion 921. The clamping groove 922 also has a major-arc cross section, and viewing from the perspective view, the clamping groove 922 is in a shape of tube with a slot 923.

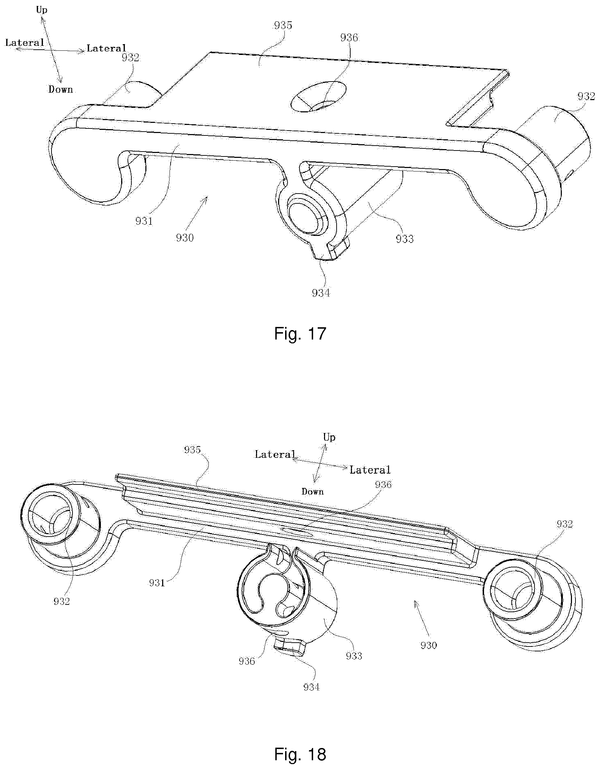

Referring to Figs. 17 and 18, the first blanking cap 930 has a first arm portion 931 for enclosing a distal end of the slide groove 914 in Fig. 15, first tube portions 932 located at two sides of the first arm portion 931 for enclosing distal ends of the auxiliary slide rails 915 in Fig. 15, a second tube portion 933 located below the first arm portion 931 for enclosing the clamping portion 918 in Fig. 15 in the clamping groove 922 in Fig. 16, and a blocking portion 934 located below the second tube portion 933. The first arm portion 931 is further extended out of the first plate portion 935, and the first plate portion 935 is provided with a bolt hole 936. It can be seen more clearly from Fig. 18 that the bolt hole 936 penetrates through the first plate portion 935 and the second tube portion 933.

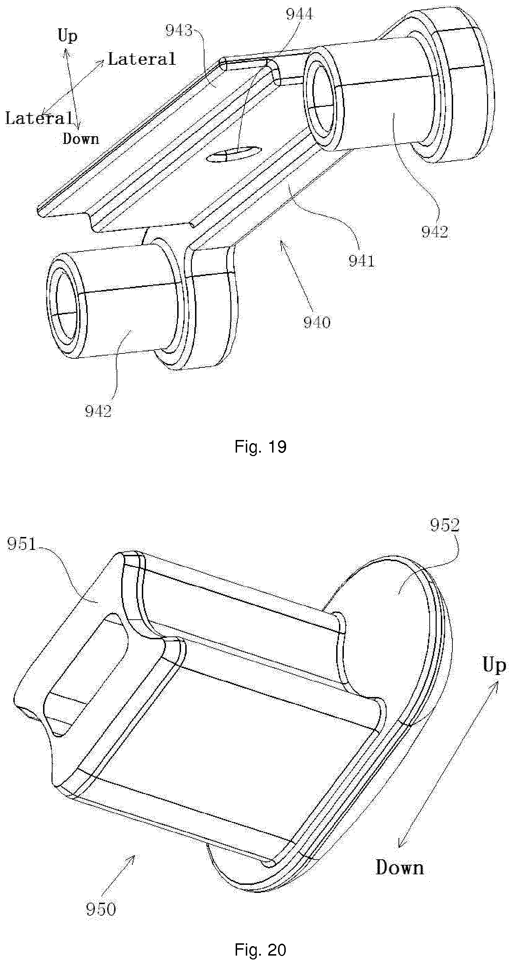

Referring to Fig. 19, the second blanking cap 940 has a second arm portion 941 for enclosing a proximal end of the slide groove 914 in Fig. 15, fourth tube portions 942 located at two sides of the second arm portion 941 for enclosing proximal ends of the auxiliary slide rails 915 in Fig. 15, and a second plate portion 943 extending from the second arm portion 941. The second plate portion 943 is provided with a bolt hole 944. Different from the first blanking cap 930, no structure for enclosing the clamping portion 918 and the clamping groove 922 is provided below the second arm 941 of the second blanking cap 940.

Referring to Fig. 20, the third blanking cap 950 has a third tube portion 951 for enclosing the tubular portion 921 of the skeleton 920, and a stop portion 952 extending upwards from the third tube portion 951.

In combination with Figs. 13 to 20, a process of assembling the umbrella ribs 9 of the present embodiment is as follows.

The clamping portion 918 of the slide rail 910 is inserted into the clamping groove 922 from an end of the skeleton 920, and the connecting rib 917 extends out from the slot 923 formed on the clamping groove 922, such that the clamping portion 918 cooperate with the clamping groove 922 to clamp the skeleton 920 and the slide rail 910 together. The clamping portion 918 is communicated with the clamping groove 922 through the slot 919, and a space formed by the clamping portion and the clamping groove may be configured to receive conducting lines of the solar cells to be mounted. Then, the distal end of the slide rail 910 is enclosed by the first blanking cap 930, the blocking portion 934 of the first blanking cap 930 is inserted into the notch 924 of the skeleton 920, and a bolt passes through the bolt hole 936 and then is fastened onto the bottom wall 911. In such case, the first tube portions 932 are inserted into the auxiliary slide rails 915, and the second tube portion 933 is inserted into the clamping groove 922. Then, the proximal end of the slide rail is enclosed by the second blanking cap 940, at which time the fourth tube portions 942 of the second blanking cap 940 are inserted into the auxiliary slide rails 915 of the slide rail 910, and a bolt passes through the bolt hole 944 and then is fastened onto the bottom wall 911. Subsequently, the third tube portion 951 of the third blanking cap 950 is inserted into the tubular portion 921 of the skeleton 920, so as to enclose the distal end of the skeleton 920, and the stop portion 952 of the third blanking cap 950 cooperates with the blocking portion 931 to limit a position of the first blanking cap 930, in this way, after the third blanking cap 950 is fastened onto the skeleton 920 through the manners such as a bolt, a rivet and interference-fit, the first blanking cap 930 and the slide rail 910 can be prevented from sliding out of the skeleton 920.

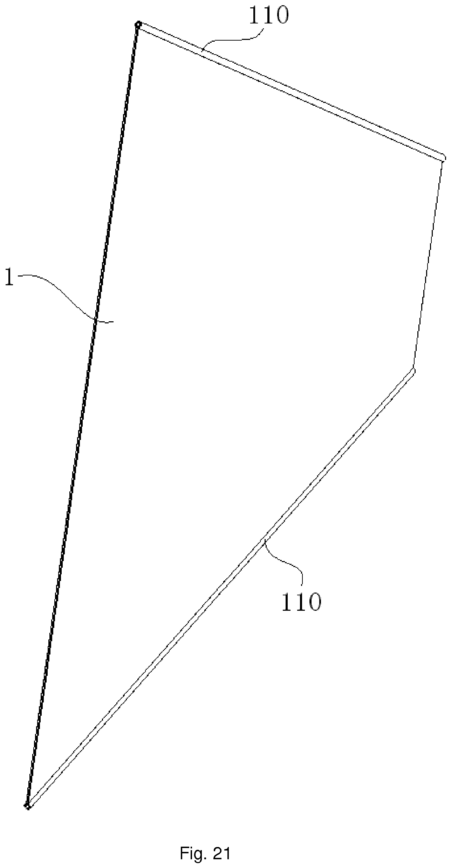

Referring to Fig. 21, the support rods 110 are connected to two sides of the umbrella cloth 1, so as to serve a supporting function to the umbrella cloth 1.

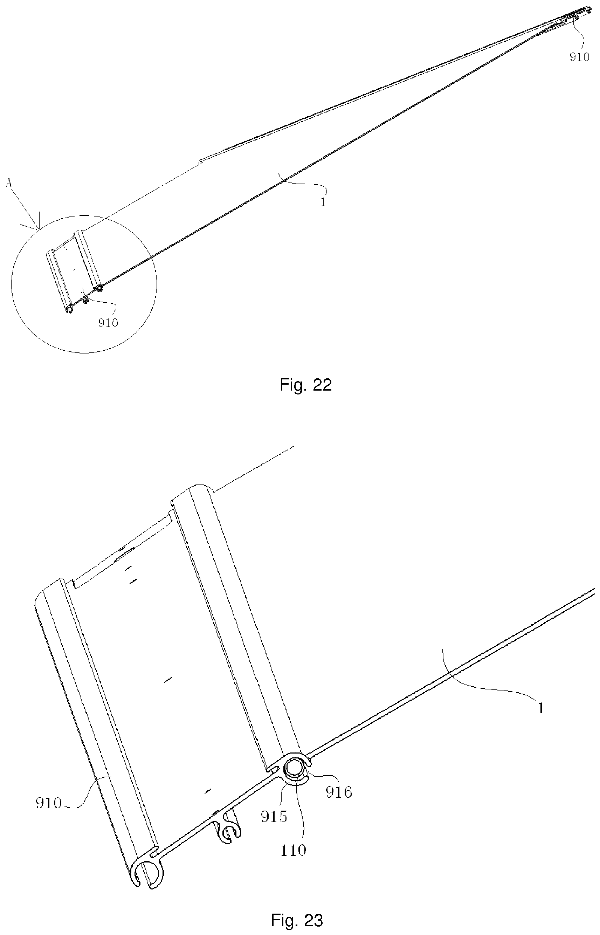

Referring to Figs. 22 and 23, two support rods 110 of one piece of umbrella cloth 1 are respectively located inside the auxiliary slide rails 915 of the slide rails 910 of two neighboring umbrella ribs 9. The first tube portions 932 of the first blanking cap 930 and the fourth tube portions 942 of the second blanking cap 940 enclose the support rods 110 inside the auxiliary slide rails 915, and the slot 916 of the auxiliary slide rail 915 allows the umbrella cloth 1 to extend therefrom, so as to realize the folding closing or opening of the solar umbrella. When the umbrella cloth needs to be replaced, the first blanking cap 930 is opened, then the support rods 110 of the umbrella cloth 1 can be extracted from the auxiliary slide rails 915, such that it is more convenient to replace the umbrella cloth 1, which causes the requirements of maintenance, shape change, and so on of the umbrella to be satisfied. Therefore, it is beneficial for the umbrella cloth 1 to be in separated structures. Both of the first blanking cap 930 and the second blanking cap 940 have the function of enclosing the slide groove 914 and the auxiliary slide rails 915, and meanwhile can protect the solar cells 101 and the support rods 910 of the umbrella cloth 9.

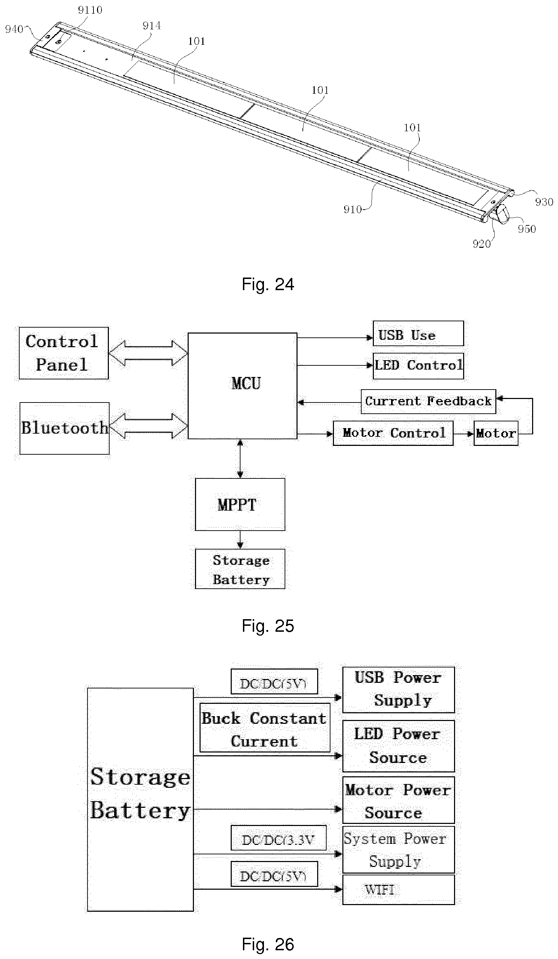

Referring to Fig. 24, the solar cells 101 are limited, by the first blanking cap 930 and the second blanking cap 940, inside the slide groove 914, and are in sliding fit with the slide groove 914. Edges of the solar cells 101 are stuck at the gaps 913, without pasting or stitching. Supporting the solar cells 101 with the slide grooves 914 on the umbrella ribs 9 has following advantages: firstly, the umbrella cloth 1 of the solar umbrella can be arbitrarily folded without damaging the solar cells 101; secondly, when a solar cell 101 needs to be replaced, the whole slide rail 910 and the solar cells 101 thereon can be replaced on the whole by opening the third blanking cap 950, or the first blanking cap 930 is opened to extract the solar cell 101 to merely replace the solar cell 101. If flexible solar cells are used, the solar cells 101 can be extracted from the slide groove 914 only with the aid of slight deformation of the flexible solar cells, even without opening the first blanking cap 930 and the third blanking cap 950, therefore, the detachment is more convenient; thirdly, since the umbrella cloth 1 does not need to support weight of the solar cells 101, the umbrella cloth 1 is less likely to be damaged. The slide groove 914 is communicated with the clamping groove 922 through the communicating hole 9110, meanwhile, the second blanking cap 940 does not enclose the clamping portion 918 or the clamping groove 922 of the slide rail 910. Therefore, the conducting lines of the solar cells 101 can enter the clamping groove 922 of the skeleton 920 through the communicating hole 9110, and further enter the umbrella rod 2 and be connected with the storage battery 8 inside the umbrella rod 2. In a whole running process of the conducting lines of the solar cells 101, the conducting lines can be protected by the skeleton 920, the line concentration device 5 and the umbrella rod 2, and the folding of the solar umbrella does not affect the conducting lines, which avoids fracture of the conducting lines. In practical application, a communicating hole may also be provided in the second blanking cap 940, so as to enable the slide groove 914 to be communicated with the clamping groove 922.

Using separated structures for the slide rail 910 and the skeleton 920 and assembling them in a clamping manner have following advantages: after the third blanking cap 950 is opened, the slide rail 910 can be extracted out just by pulling the slide rail 910 outwards, which facilitates the replacement and maintenance of the slide rail 910, and satisfies different dimension requirements of the solar cells 101. As mentioned above, the slide rail 910 and the skeleton 920 can also be in a one-piece structure, which simplifies assembling requirements, but will bring shaping difficulty for molding of the umbrella ribs 9.

Referring to Fig. 25, a control circuit of the solar umbrella includes an MCU (main control unit), an MPPT (maximum power point tracing) controller and so on. The MCU is connected with the storage battery 8 through the MPPT controller. Power-on/power-off of the USB interface 604, the LED lamp 901, the motor and so on are controlled by the MCU. The touch panel in Fig. 7 may send a control signal to the MCU in a bluetooth manner. The stretch and retraction of the umbrella may be realized through corotation or contrarotation of the motor, wherein the umbrella stretches upon the corotation of the motor, and the umbrella retracts upon the contrarotation of the motor. The motor is controlled by a PID algorithm, to realize accurate power-on and power-off of the motor.

Referring to Fig. 26, the storage battery 8 serves as a power supply for the USB interface 604, the LED lamp 901, the motor, the control system and WIFI, and the pressure of the storage battery is regulated by a DC/DC converter.

Although the present disclosure is described in combination with the above embodiments, the present disclosure is not limited to the above embodiments, but is merely defined by the claims. A person ordinarily skilled in the art can readily make modifications and alterations thereto, without departing from the essential concept and scope of the present disclosure.

## Claims

1. A solar umbrella, comprising umbrella cloth, an umbrella rod, an umbrella base, an auxiliary umbrella, umbrella ribs, solar cells, a storage battery and a line concentration device, wherein the solar cells which are packaged are provided on the umbrella cloth, the umbrella cloth is supported by the umbrella ribs, the umbrella rod connects the umbrella ribs and the umbrella base, the line concentration device is mounted on the umbrella ribs, the line concentration device has multiple sockets, the solar cells are connected to the sockets of the line concentration device, the auxiliary umbrella is disposed above the umbrella cloth and covers the sockets, and the storage battery is located inside the umbrella rod and connected with the line concentration device.

2. The solar umbrella of claim 1, wherein the line concentration device comprises a top cover of the line concentration device, a line concentrator fastener, a line concentrator and a line concentration device base, the line concentration device base is mounted on the umbrella ribs, the line concentration device base is provided thereon with a recess, the line concentrator fastener is fastened onto the line concentration device base so as to hold the line concentrator within the recess, the sockets are located on the line concentrator, and the top cover of the line concentration device is located above the auxiliary umbrella and connected with the line concentrator fastener so as to clamp the auxiliary umbrella.

3. The solar umbrella of claim 1, further comprising a control device mounted on the umbrella rod, wherein the control device is provided with a Universal Serial Bus (USB) interface and a charging interface.

4. The solar umbrella of claim 3, wherein Light Emitting Diode (LED) lamps are mounted on the umbrella ribs, opening and closing of the umbrella ribs are driven by a motor, and the storage battery supplies power to the LED lamps and the motor, under control of the control device.

5. The solar umbrella of claim 1, wherein the umbrella base comprises a base upright column, a base main body and a base fastening device, the base upright column is connected through the base fastening device with the base main body, and the umbrella rod is inserted into and detachably connected with the base upright column, and is tightened and fixed through a fastening device.

6. The solar umbrella of claim 1, wherein the storage battery comprises a battery cell, a fixing plate, a battery top cover and a battery base, the battery cell is clamped by the fixing plate and fixed between the battery top cover and the battery base, the battery base is provided with a positioning groove, a hole is provided at the positioning groove, a protrusion corresponding to the positioning groove is provided within the umbrella rod, the positioning groove cooperates with the protrusion to enable the storage battery to slide into the umbrella rod, and a bolt passes through the umbrella rod and then is screwed in the hole at the positioning groove.

7. The solar umbrella of claim 1, wherein each of the umbrella ribs comprises a skeleton, a slide rail mounted on the skeleton, a first blanking cap, a second blanking cap and a third blanking cap, a length of the slide rail is smaller than a length of the skeleton, the slide rail has a bottom wall and a pair of upper walls, with the pair of upper walls extending from two sides of the bottom wall towards each other with a gap formed between each upper wall and the bottom wall, the bottom wall and the upper walls define a slide groove which is partially open, the first blanking cap encloses a distal end of the slide rail, the second blanking cap encloses a proximal end of the slide rail, and the third blanking cap encloses a distal end of the skeleton and limits a position of the first blanking cap.

8. The solar umbrella of claim 7, wherein an auxiliary slide rail is provided at each of the two sides of the slide rail, and the auxiliary slide rail is in shape of a tube on which a slot is provided and which has a major arc- shaped cross section.

9. The solar umbrella of claim 8, further comprising support rods located at two sides of each piece of umbrella cloth wherein the two support rods are respectively located inside the auxiliary slide rails of neighboring umbrella ribs, and the each piece of umbrella cloth extends out from the slots of the auxiliary slide rails.

10. The solar umbrella of claim 8, wherein a connecting rib extends downwards from a middle position of the bottom wall of the slide rail and a clamping portion is located below the connecting rib, the clamping portion is in shape of a tube on which a slot is provided and which has a major arc-shaped cross section, the skeleton has a tubular portion and a clamping groove, with the clamping groove located at a top of the tubular portion and having a major arc-shaped cross section, and the clamping portion of the slide rail is located inside the clamping groove and the connecting rib extends out from a slot formed on the clamping groove.

11. The solar umbrella of claim 10, wherein the slide groove is communicated with the clamping groove.

12. The solar umbrella of claim 10, wherein the first blanking cap and the third blanking cap are in separated structures, the first blanking cap has a first arm portion, first tube portions, a second tube portion and a blocking portion, with the first arm portion configured for enclosing the slide groove, the first tube portions located at two sides of the first arm portion and configured for enclosing the auxiliary slide rails, the second tube portion located below the first arm portion and configured for enclosing the clamping portion, and the blocking portion located below the second tube portion, and the third blanking cap has a third tube portion for enclosing the tubular portion and a stop portion extending upwards from the third tube portion.

13. The solar umbrella of claim 10, wherein the second blanking cap has a second arm portion and fourth tube portions, with the second arm portion configured for enclosing the slide groove, and the fourth tube portions located at two sides of the second arm portion and configured for enclosing the auxiliary slide rails, and the second blanking cap does not enclose the clamping portion or the clamping groove.

14. The solar umbrella of any one of claims 7 to 13, wherein the first blanking cap and/or the second blanking cap are/is fastened, through a bolt, onto the slide rail, and/or the third blanking cap is fastened, through a bolt, onto the skeleton.

15. The solar umbrella of claim 7, wherein each of the solar cells is limited, by the first blanking cap and the second blanking cap, inside the slide groove and in sliding fit with the slide groove.

16. The solar umbrella of claim 7, wherein the first blanking cap and the third blanking cap are in a one-piece structure.
